# EUROPEAN PATENT APPLICATION

(11) **EP 1 389 872 A1**
(43) Date of publication of application: **18.02.2004**
(21) Application number: 02292045.8
(22) Date of filing: 16.08.2002
(51) Int. Cl.: H04N 5/445

(54) **Method and apparatus for combining video signals**

(71) Applicant: Thomson Licensing S.A., 92648 Boulogne Cedex (FR)
(72) Inventor: Li, Chun Fat, Singapore 529861 (SG); Chin, Yuan Fuat, Singapore 679645 (SG)
(74) Representative: Rossmanith, Manfred, Dr.

(57) **Abstract**

A method is proposed for combining a first and a second video signal by appropriately switching between the first and the second video signal during synchronization intervals.

An apparatus for combining a first and a second video signal uses a switch for disabling the video signal during a vertical retrace interval. The switch is controlled by a control signal generated by logical 'AND'-combining a vertical and a horizontal retrace signal.

## Description

The invention relates to a method and a video apparatus for combining video signals for On-Screen display.

Video sequences for display in a line-by-line scanning manner can be represented by video signals according to several standards. Multiple standards are stipulated for displaying all lines of an image frame successively in one single field, so-called progressive scan display, or displaying image frames divided into sub-fields, so-called interlaced display. The number of lines contained in one image frame depends on the video standard. Most common video standards are PAL, having 625 lines in each frame, and NTSC, having 525 lines in each frame. The sub-fields in interlaced video are denominated odd and even field. Odd fields contain lines with line numbers starting from 1 in a two-increment, even fields contain lines with line numbers starting from 2 in a two-increment.

Existing video formats were stipulated so as to be compatible with displays reproducing images in a line-by-line raster scanning way. In one embodiment of this type of display, electron beams are moved across a screen, which is coated with a phosphor layer, in lines from one side to the other. Multiple lines are arranged underneath each other to form the complete image. The phosphor layer emits light where it is hit by the electron beam. For emitting light of different intensities, the electron beam is amplitude-modulated. At the end of each line follows a horizontal retrace interval, during which the position of the electron beam is reset to the beginning of a line. In the same time, the next line of the field is addressed. During this interval, the electron beam needs to be switched off, or blanked, to avoid an unwanted visible trace on the screen. The same applies to the interval following at the end of a field: The electron beam's position needs to be reset to the top of the screen. During this vertical retrace interval, the electron beam needs to be blanked, too.

A first well-known video standard is the Composite Video Blanking Signal (hereinafter: CVBS), which consists of a single signal where a luminance signal is frequency multiplexed with a chrominance signal composed of 2 chrominance components. The odd and even fields of a frame are transmitted alternating. The individual lines forming the field are transmitted successively. Synchronizing signals indicating start of a field and start of a line are multiplexed into the video signal in the appropriate positions.

The beginning of a line is preceded by horizontal synchronizing signals, and the beginning of a field is preceded by vertical synchronizing signals. The horizontal synchronizing signal additionally carries information about maximum and minimum brightness of the video signal for calibrating the black and white levels. The additional parts of the signal may be used for alignment purposes, e.g., to re-align the display properties in case of changing properties of the transmission channel during transmission. The vertical synchronizing signal extends over a longer period than the horizontal synchronizing signal. It typically extends over several line periods and consists of a defined sequence of pulses distinct from the horizontal synchronizing signal. A defined timing relationship between the horizontal and the vertical synchronization signals is used to distinguish between odd and even fields.

According to another well-known standard, video sequences are represented by individual red, green and blue signals (RGB standard). This standard provides individual transmission channels for the three individual color components. Each of the color channels carries a video signal representing the intensity of the associated color. By mixing together the three individual color components all colors are reproducible.

The RGB standard does not allow any video signal be present during the vertical retrace interval.

In the past, RGB signals have been mainly used for two purposes: first, inside a video display (TV set for instance), the received CVBS signal was converted into RGB signals by a video circuit, each component of the video signal then feeding a corresponding electron gun of a cathode ray tube; second, the RGB signals were used to define a picture to be superimposed as on-screen display over a video sequence represented by a CVBS signal as described above.

In today's appliances, RGB signals are more commonly used. DVD recorders and players, for example, record and/or reproduce video signals stored on optical data carriers generally in RGB-like formats. Therefore, the RGB signal is already present at the source of the signal. Additionally, most of such devices provide on-screen display for displaying information about the status of the device or the like. Since the video information is available as RGB signal, and components generating the on-screen display supply RGB signals, too, it is good practice to combine the video signals, e.g., via a switch.

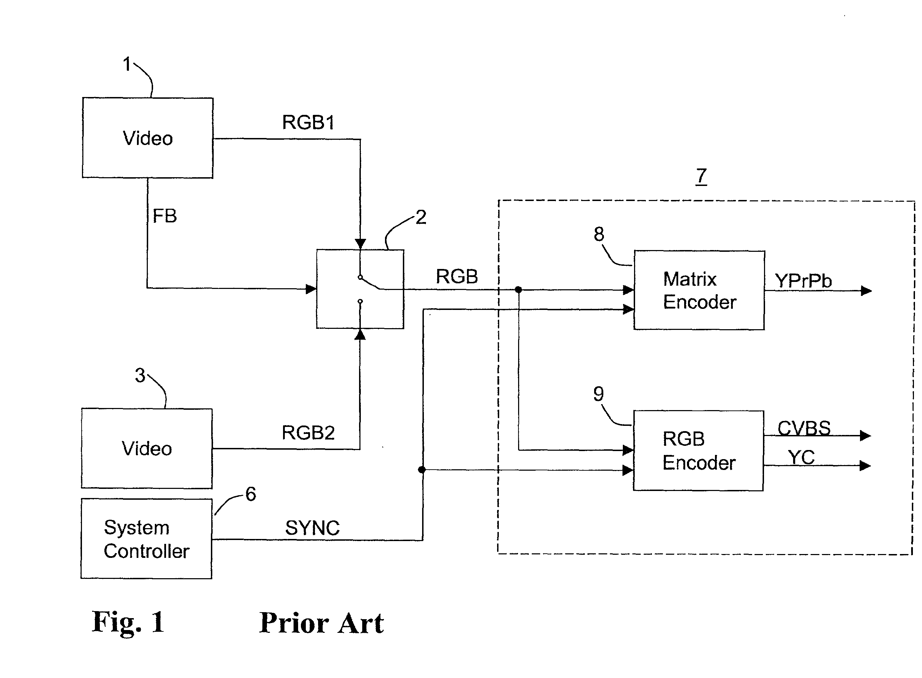

Fig. 1 shows a typical example of a video apparatus having on-screen display, which will be described in the following.

In the case that a first video source RGB1 supplying additional video information for on-screen display in a line-by-line manner is comprised, switch 2 is actuated by a fast blanking signal FB. The fast blanking signal FB is issued by the first video source RGB1, which may be the source for on-screen display. It is substantially in synchronism with the horizontal retrace interval of the video apparatus to allow proper, undistorted display. When displaying additional information originating from the first video source RGB1, the fast switch selects the first video source RGB1. During the horizontal retrace interval, in response to the fast blanking signal FB, the fast switch is selecting the second video source RGB2. After the horizontal retrace interval is over, the fast switch selects the first video source RGB1 again. Since the first video source RGB1 does not receive a signal indicating the vertical retrace interval, the first video source RGB1 keeps switching between the first and the second video source as long as the on-screen display is activated.

The transmission of the video signal to a display unit can be accomplished in several formats. Of course, it may be possible to transmit the individual RGB signals. It is, however, desirable to convert the RGB signals into a variety of other formats for simple distribution, such as the CVBS format introduced above. To accomplish this task, a video signal converter 7 is incorporated into the device.

The video signal converter 7 requires the RGB signals not to contain any video content during the vertical retrace interval. The RGB signals and the required synchronization signals are fed to the video converter 7 via dedicated inputs. Synchronization signals comprise, inter alia, horizontal retrace signal and vertical retrace signal, as well as horizontal and vertical equalization signals. Signals of this kind may originate from a system processor or the like. The video converter 7 converts the video signals and the synchronization signals to, e.g., a CVBS signal, or into other video signal formats.

It may occur that an apparatus contains additional circuitry for generating on-screen display information to be displayed, which does not fully comply with the requirements, with regard to not creating video signals during the vertical retrace interval. As combining of the video signals is performed in the RGB signal format, the video format converter 7 may produce unwanted results upon receiving signals not fully complying with the standards.

If any of the video signals to be converted supplies video information during the vertical retrace interval, video format converter 7 may issue a signal, which may corrupt the recognition of odd or even field in circuits for processing video signals for interlaced display, e.g., for standard television receivers. This results in reduced horizontal resolution and substantially reduced picture quality.

It is, therefore, an object of the invention to provide a method, a control signal and an apparatus for combining video signals according to the requirements for proper video signal format conversion. The invention proposes a method for combining a first and a second video signal ensuring that no video content is present in the vertical retrace interval by appropriately selecting the video signals. The invention further proposes a control signal for controlling the selection of video signals and a method to generate the control signal. Furthermore, the invention proposes a video apparatus comprising means for combining a first or a second video signal, means for disabling the video signal during the vertical retrace interval and means for generating a control signal for the disabling means.

In a first implementation of the method, for combining a first and a second video signal, a switch selects the video signal according to a control signal. The control signal substantially coincides with the horizontal retrace signal. Upon a first status of a control signal, the switch is set to a first position and the first video signal is selected. Upon the control signal changing its status, the switch is set to a second position and the second signal is selected. The control signal is generated by logically 'AND' combining a fast blanking signal issued by the first video source, and a correction signal issued by the system control. The correction signal is coinciding substantially with the vertical retrace interval. The correction signal is disabling the fast blanking signal and inhibits setting the fast switch to the first video signal, which may carry video information during the vertical retrace interval. Instead, the fast switch is set to the second video signal, which is not carrying a video signal during the vertical blanking interval. In doing so, the video format converter does not receive video signals not complying with the standards and provides proper video signals at its output.

A preferred embodiment of the apparatus according to the invention comprises multiple video signal sources, a switch and a video format conversion stage, substantially as described above in the prior art section. The first video source supplies a video signal that contains video information in the vertical retrace interval. The second video source supplies a video signal that does not contain video information in the vertical retrace interval. The apparatus of the embodiment further comprises a logical 'AND'-gate for combining the fast blanking signal and the correction signal.

The length of the correction signal issued by a system controller is substantially corresponding with the vertical retrace interval. The switch is controlled by a control signal resulting from the logical 'AND' operation applied to the fast blanking signal and the correction signal. During normal line display within an odd or even frame, the status of the correction signal is logical "1". Therefore, the fast blanking signal from the first video source, which may be an OSD-module, is controlling the switch. During the vertical blanking interval, the status of the correction signal is logical "0". Therefore, the fast switch selects the second video source during the whole interval of the correction signal, thus providing a video signal carrying no video information.

In another embodiment it is possible to control with the control signal a switch, which is shorting the video signal to ground, or opens the connection, such that no signal at all is applied to the video signal converter during certain periods.

The invention will be described in detail in the following with reference to the drawings. In the drawings
- Fig.1: shows an example for the prior art video switching,
- Fig.2: shows an embodiment of the video apparatus according to the invention, and
- Fig.3: contains a table showing the output of the switch according to the input signals.

In the drawings, identical reference signs indicate identical or corresponding parts.

The video apparatus shown in Fig.1 is referred to in the prior art section.

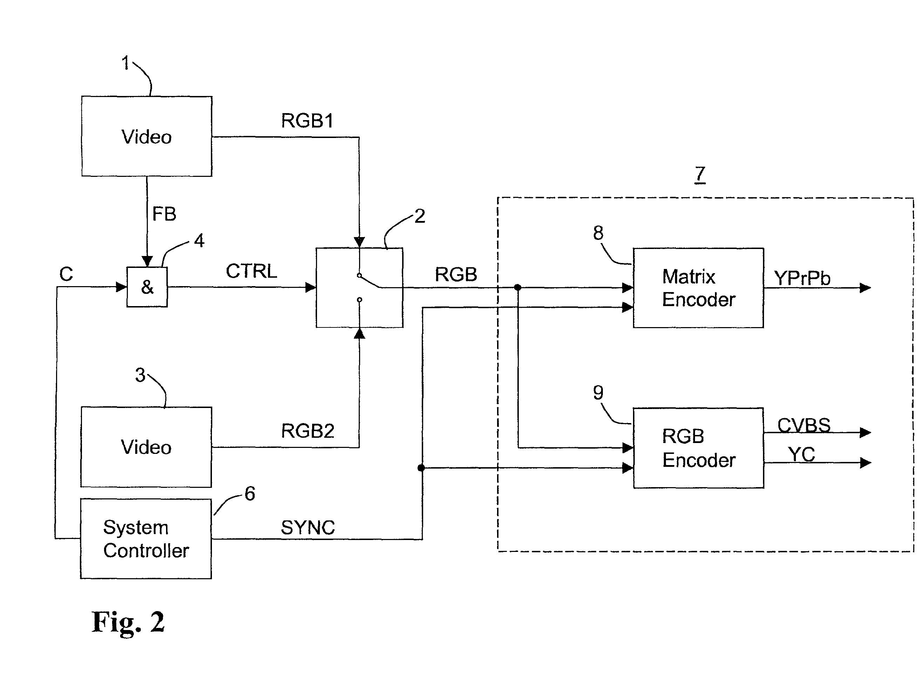

In the video apparatus according to the invention shown in Fig. 2, a first video source 1 issues a first RGB video signal RGB1, which is fed to a switch 2. The first video signal may contain video content during the vertical retrace interval. A second video source 3 supplies a second RGB video signal to the switch 2. The second video signal does not contain video content during the vertical retrace interval. The video source 1 also issues a fast blanking signal FB to a first input of a logical 'AND'-gate 4. The fast blanking signal FB is substantially coinciding with the horizontal retrace interval. A system controller 6 supplies a correction signal C to a second input of the logical 'AND'-gate 4. The signal C is substantially coinciding with the vertical retrace interval. The output of the logical 'AND'-gate supplies a control signal CTRL to the switch 2. The switch 2 selects the first or the second video signal RGB1 or RGB2 in response to the control signal CTRL and supplies the selected video signal RGB to a video format converter 7. The video format converter comprises a matrix encoder 8, presenting at its output a video signal in the YPrPb format, and an analog RGB encoder 9, presenting at its outputs video signals in the CVBS format and the YC format. The matrix encoder 8 and the analog RGB encoder 9 are connected to the system controller 6, which supplies synchronization signals SYNC.

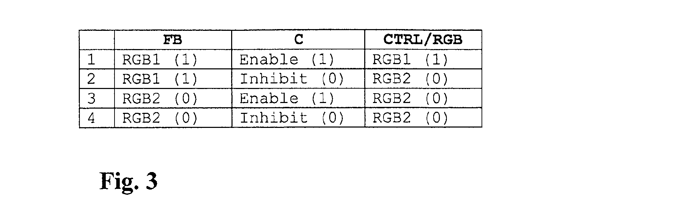

Fig. 3 shows a table demonstrating the output of the switch 2 to the video format converter 7 upon the logical 'AND' operation applied to the signals fast blanking signal FB and C. In the first line, the fast blanking signal FB is set to select the video signal RGB1, the logical status is "1", accordingly. The correction signal C is set to enable (logical "1"), and the logical 'AND'-gate issues a control signal CTRL to the fast switch selecting RGB1 (logical "1"). In line 2 of the table the fast blanking signal FB is set to select video signal RGB1, too. The correction signal C, however, is set to inhibit (logical "0"), and therefore the logical 'AND'-gate issues a control signal CTRL to the fast switch selecting RGB2 (logical "0"). Lines 3 and 4 of the table describe rather trivial cases, in which the video signal selected by the fast blanking signal FB is RGB2 anyway (logical "0"), therefore the control signal CTRL issued selects the video signal RGB2 (logical "0").

## Claims

1. Method for combining a first and a second video signal for on-screen display, comprising the steps of selecting the first video signal during a display interval and selecting the second video signal during a horizontal retrace interval, **characterized in that** during a vertical retrace interval the second video signal is selected.

2. Method according to Claim 1, **characterized in that** the second video signal is carrying no video information in the vertical retrace interval.

3. Method according to Claim 1, **characterized in that** the combined video signal is adapted for reproduction in a raster scanning way.

4. Method according to Claim 3, **characterized in that** the video signal is interlaced video.

5. Video apparatus for combining a first and a second video signal for on-screen display, wherein a switch selects the first video signal during a display interval and the second video signal during a horizontal retrace interval, **characterized in that** a control signal controls means for disabling the video signal during a vertical retrace interval.

6. Video apparatus according to Claim 5, **characterized in that** the means for disabling the video signal comprise a switch.

7. Video apparatus according to Claims 5 and 6, **characterized in that** for disabling the video signal the switch connects the video signal to ground.

8. Video apparatus according to Claim 5, **characterized in that** the means for disabling the video signals is the switch for selecting the first or the second video signal, that for disabling the video signal the second video signal is selected and that the second video signal carries no video information in the vertical retrace interval.

9. Video apparatus according to Claim 5, **characterized in that** the control signal is generated by a logical 'AND' gate combining a horizontal and a vertical retrace signal.

10. Signal for controlling disabling of a video signal during a vertical retrace interval generated by a video apparatus substantially as described in Claim 9.
